# EUROPÄISCHE PATENTSCHRIFT

(11) **EP 1 606 161 B1**
(45) Veröffentlichungstag und Bekanntmachung des Hinweises auf die Patenterteilung: **28.06.2006**
(21) Anmeldenummer: 04716194.8
(22) Anmeldetag: 02.03.2004
(51) Int. Cl.: B64B 1/08

(54) **AUFTRIEBSKÖRPER FÜR EIN LUFTSCHIFF**
LIFTING BODY FOR AN AIRSHIP
CORPS DE SUSTENTATION POUR DIRIGEABLE

(30) Priorität: 21.03.2003 CH 491032003
(43) Veröffentlichungstag der Anmeldung: 21.12.2005
(73) Patentinhaber: Prospective Concepts AG, 8152 Glattbrugg (CH)
(72) Erfinder: PEDRETTI, Mauro, CH-6710 Biasca (CH); LUCHSINGER, Rolf, CH-8610 Uster (CH)
(74) Vertreter: Salgo, Reinhold Caspar
(86) Internationale Anmeldenummer: PCT/CH2004/000110
(87) Internationale Veröffentlichungsnummer: WO 2004/083034

(56) Entgegenhaltungen:
- DE-A- 3 508 101
- DE-A- 19 735 641
- FR-A- 2 325 876
- GB-A- 364 518
- US-A- 974 434
- US-A- 4 052 025
- US-A- 4 265 418

## Beschreibung

Die vorliegende Erfindung betrifft einen Auftriebskörper für ein Luftschiff nach dem Oberbegriff des Patentanspruches 1. Ein solcher Auftriebskörper ist aus DE 19735 641 bekannt. Auftriebskörper für Luftschiffe sind an sich bekannt und werden im Wesentlichen in drei Typen eingeteilt: Die unstarren, die halbstarren und die starren Luftschiffe. Der vorliegenden Erfindung am nächsten kommen die halbstarren Luftschiffe.

Diese besitzen einen Kielträger, an dem unter anderem Motoren- und Fahrgastgondeln, wie auch Frachträume angebracht sind. Bei einem halbstarren Luftschiff ist der Auftriebskörper weitgehend frei von festen Strukturen und wird durch einen inneren Überdruck in seiner vorgesehenen Form gehalten.

Der Kiel ist auf seiner ganzen Länge mit dem Auftriebskörper verbunden. Damit er die durch den Auftriebskörper, die Nutzlast und die Motoren erzeugten Druck- und Zugkräfte aufnehmen kann, muss er verwindungssteif konstruiert sein. Eine derartige Konstruktion ist kompliziert und trägt, trotz Verwendung von Leichtbaumaterialien, erheblich zum Leergewicht eines Luftschiffes bei. Weil jede Gewichtsersparnis bei einem Luftschiff, ungeachtet des Typs, der Nutzlast zugute kommt, ist es wichtig, das Eigengewicht eines Luftschiffes möglichst niedrig zu halten. Andererseits kann durch ein besseres Verhältnis von Nutzlast zu Eigengewicht der Auftriebskörper kleiner gestaltet werden und trotzdem die gleiche Nutzlast wie ein grösseres Luftschiff tragen.

Gemeinsam ist allen drei Typen von Luftschiffen das Problem, dass eine Last wie beispielsweise die Fahrgastgondel, an der nicht festen Hülle des Auftriebskörpers befestigt werden muss, ohne diese wesentlich zu verformen oder deren Volumen zu verringern. Bei den starren Luftschiffen wird dieses Problem durch das ein Endoskelett bildendes Fachwerk, bei den halbstarren mittels des Kiels gelöst. Bei den unstarren Luftschiffen werden beispielsweise Tragnetze um die Hülle gelegt, um die Last daran anzuhängen. Bei den starren und halbstarren Luftschiffen sind diese Lösungen verhältnismässig schwer, bei den unstarren instabil.

Aufgabe der vorliegenden Erfindung ist es, die erwähnten Nachteile halbstarrer Luftschiffe im Besonderen und von Luftschiffen im Allgemeinen zu überwinden und damit ein besseres Verhältnis von Nutzlast zu Eigengewicht zu erreichen.

Die Lösung der gestellten Aufgabe ist wiedergegeben im kennzeichnenden Teil des Hauptanspruches 1 bezüglich ihrer wesentlichen Merkmale und weiterer vorteilhafter Eigenschaften in den Unteransprüchen.

Anhand der beigefügten Zeichnungen wird die Erfindung näher erläutert.

### Es zeigen:

- Fig. 1: einen ersten schematischen Aufbau der wesentlichen Komponenten eines Auftriebskörpers in Seitenansicht,
- Fig. 2: einen zweiten schematischen Aufbau eines Auftriebskörpers in Seitenansicht,
- Fig. 3: einen Querschnitt durch den Auftriebskörper der Fig. 1,
- Fig. 4, 5: eine Frontalansicht des ersten und eines dritten Aufbaus des Auftriesbkörpers,
- Fig. 6: eine erste Art einer Verbindung eines Druckstabes mit der Hülle des Auftriebskörpers,
- Fig. 7: eine zweite Art der Verbindung eines Druckstabes mit der Hülle des Auftriebkörpers,
- Fig. 8: eine Variante der Fig. 7,
- Fig. 9: eine schematische Darstellung zur Befestigung einer Antriebsmaschine, .
- Fig. 10, 11: eine Kreuzungsstelle von Zugseilen.
- Fig. 12, 13: eine Isometrie und eine Seitenansicht eines Luftschiffes mit einem erfindungsgemässen Auftriebskörper

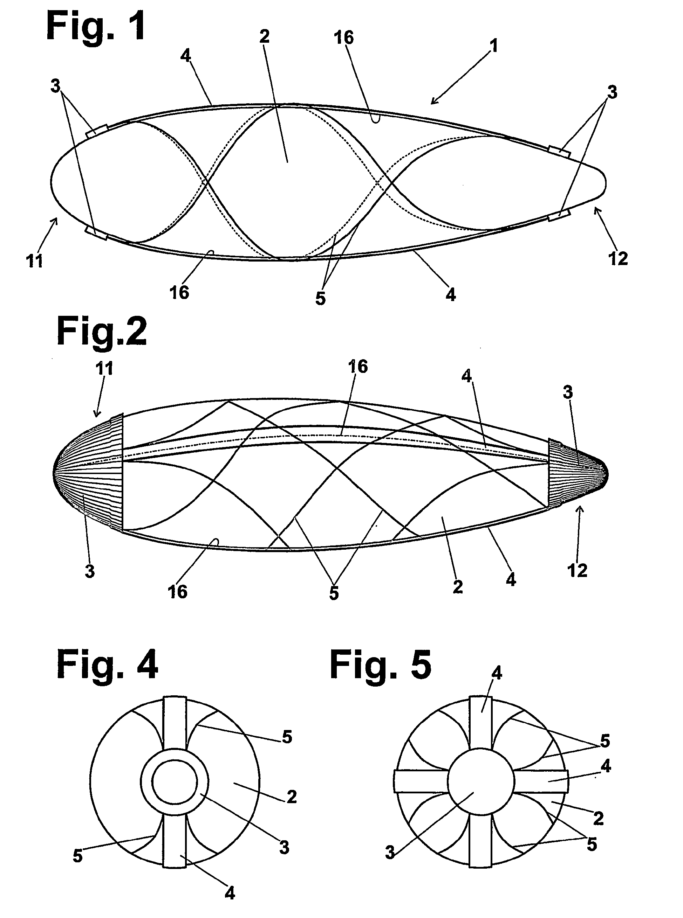

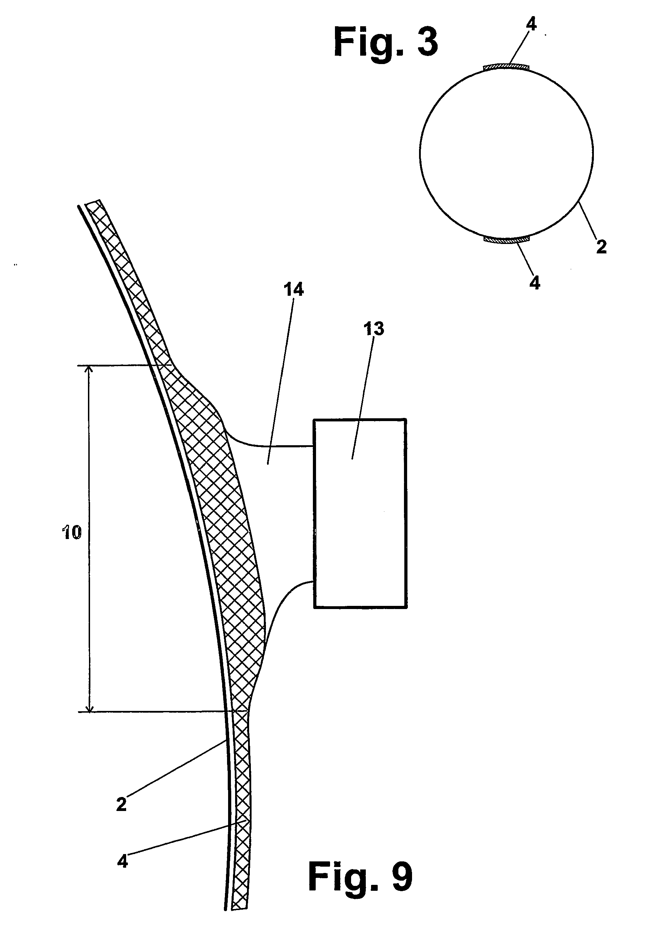

Fig. 1 zeigt die Seitenansicht eines erfindungsgemäss aufgebauten Auftriebskörpers 1 für ein Luftschiff. Die Hülle 2 des Auftriebskörpers 1 bildet einen ellipsoidartigen Hohlkörper, welcher sich gegen das Heck 12 hin verjüngt. Im Bereich von Bug 11 und Heck 12 sind je zwei Knotenelemente 3 auf gegenüberliegenden Mantellinien 16 angebracht. Je ein Druckstab verläuft entlang einer dieser Mantellinien 16 und ist an seinen beiden Enden je in einem der Knotenelemente 3 verankert. Die Druckstäbe 4 sind biegeelastisch und schmiegen sich deshalb entlang der Mantellinie 16 an die Hülle 2. Pro Druckstab 4 verlaufen zwei Zugbänder 5. Sie verbinden dieselben Knotenelemente 3 wie der Druckstab, wobei sie sich je entlang einer Geodäten mit verschiedenem Schraubungssinn je einmal um den gesamten Hohlkörper schrauben. Das bedeutet, dass sich die Zugbänder 5 auf dem gegenüberliegenden Druckstab kreuzen. Auf der Hülle kreuzen sich jeweils zwei Zugbänder, die nicht zum selben Druckstab gehören.

Die Hülle 2 ist derart gefertigt, dass sie unter einem für Luftschiffe charakteristischen Überdruck von einigen mBar ihre vorgesehene pralle Form annimmt. Die Zugbänder 5 werden durch die Hülle 2 gespannt und ziehen an den Knotenelementen 3. Diese übertragen die Zugkräfte auf die Druckstäbe 4, welche dadurch auf Druck belastet werden. Durch das konstruktionsbedingte Gleichgewicht der Zug- und Druckkräfte ist der Auftriebskörper formstabil. Die Zug- und Druckkräfte in den Zugbändern 5 und Druckstäben 4 sind um so grösser, je grösser der Überdruck in der Hülle 2 ist. Der Auftriebskörper 1 wird deshalb mit steigendem Überdruck bei gleich bleibender Form und Dimension immer steifer und belastbarer. Die Formstabilität des Auftriebskörpers 1 erleichtert und unterstützt es, ihm eine aerodynamische Form, gegebenenfalls mit einem dynamischem Auftrieb, zu verleihen.

Die Fig. 2 zeigt einen zweiten Auftriebkörper 1. Er verfügt über dieselben strukturellen Elemente wie der erste. Die Knotenelemente 3 sind hier schalenförmig über den Bug 11 und das Heck 12 des Auftriebkörpers gelegt. Anstelle von zwei werden drei Druckstäbe und somit insgesamt sechs Zugbänder verwendet. Bei einem kreisförmigen Querschnitt dieses Auftriebkörpers 1 und einer rotationssymmetrischen Anordnung der drei Druckstäbe liegen alle Kreuzungspunkte der Zugbänder 5 auf der Hülle 2. Eine nicht rotationssymmetrische Anordnung der Druckstäbe ist selbstverständlich ebenfalls erfindungsgemäss. Je vier Zugbänder 5 laufen über einen Druckstab 4 und pressen diesen gegen die Hülle 2. In der Erfindungsidee mitenthalten ist auch die Verwendung von mehreren Paaren von Zugbändern 5 pro Druckstab 4. Auch können sich die Zugbänder 5 mehrmals um die Hülle 2 schrauben.

Fig. 3 stellt einen Querschnitte durch den Auftriebskörper der Fig. 1 dar. Er zeigt, dass prinzipiell keine Strukturen innerhalb der Hülle 2 zur Versteifung des mittels Zugbändern und Druckstäben aufgebauten Exoskelettes angebracht sein müssen.

Die Fig. 4 und 5 sind Frontalansichten des Ausführungsbeispiels der Fig. 3 einerseits und eines Ausführungsbeispiels mit vier Druckstäben 4. Diese Druckstäbe 4 und ihr je zugehöriges Paar Zugbänder 5 sind in den Knotenelementen 3 verankert. In Fig. 4 ist das Knotenelement 3 ringförmig gestaltet, in der Fig. 5 schalenförmig.

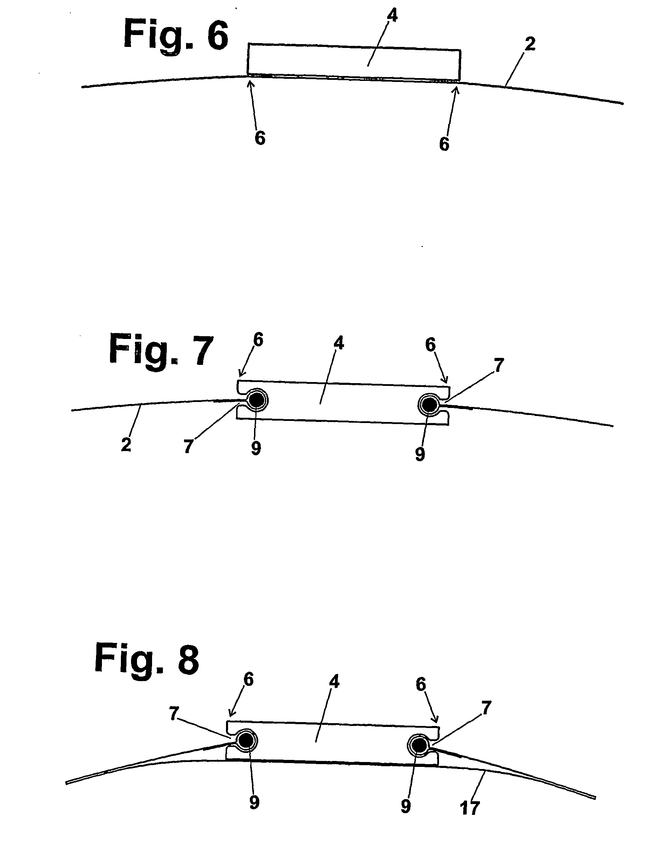

Die Fig. 6, 7 zeigen zwei Ausführungsvarianten des Ausschnittes A aus der Fig. 3. In der Fig. 6 ist der Druckstab 4 auf die Hülle 2 gelegt. Der Druckstab 4 ist mindestens im Bereich seiner Flanken 6 fest mit der Hülle 2 beispielsweise durch Kleben verbunden. Die durch den Überdruck in der Hülle 2 erzeugten Spannungen in der Hülle 2 übertragen sich dann auf den Druckstab 4. Mit dieser Massnahme kann die Knicklänge des Druckstabes 4 erheblich vergrössert werden. Wegen des Überdruckes in der Hülle 2 und der über seine Länge gebogenen Form kann der Druckstab 4 nicht nach innen knicken; die ihn überquerenden Zugbänder drücken ihn lokal gegen die Hülle 2, und in den Bereichen zwischen den Zugbändern wird er durch die Zugkräfte der Hülle 2 zurückgehalten, was ein Wegknicken nach aussen verhindert. Es ist somit möglich, den Druckstab 4 biegeelastisch und flach zu gestalten. Die Biegeelastizität der Druckstäbe 4 äussert sich direkt in einer Gewichtsersparnis: Der Aufbau eines komplizierten verwindungssteifen und somit schweren Fachwerkes ist nicht notwendig. Das im Wesentlichen funktional nach Zug- und Druckkräften getrennt aufgebaute Exoskelett stabilisiert und versteift sich selbst mit wachsendem Innendruck. Der funktionsgetrennte Aufbau äussert sich weiter in der Verwendung von spezifisch auf Druck oder Zug belastbaren Materialien womit eine weitere Gewichtsersparnis erzielt werden kann. Prinzipiell sind alle Materialien mit der Verwendung entsprechenden Eigenschaften einsetzbar. Beispielsweise können die Druckstäbe aus GFK, CFK oder einer Aluminiumlegierung aufgebaut sein, die Zugbänder aus dehnungsarmen Textilien wie beispielsweise Aramidfasern. Die Zugbänder können auch aus einem oder mehreren parallelen Kabeln beispielsweise aus Stahl bestehen. Die Querschnitte der Druckstäbe 4 können voll oder hohl sein, sandwichbauweisen und zusammengesetzte Strukturen sind ebenso denkbar. Die Möglichkeiten für den Fachmann sind mannigfaltig und im Erfindungsgedanken eingeschlossen.

Die Fig. 7 zeigt eine Variante der Verbindung von Druckstab 4 und Hülle 2 zur Einleitung der Zugspannungen der Hülle 2 in den Druckstab 4. An den Flanken 6 besitzt der Druckstab 4 Nuten 7. In den Nuten 7 verläuft ein Klemmelement 9, welches von der Hülle 2 umschlungen wird. Unter Zug verklemmt das Klemmelement in der Nut und die Zugspannungen werden auf den Druckstab übertragen. Im Erfindungsgedanken eingeschlossen sind auch andere Anordnungen der Nuten oder andere Verbindungstechniken, wesentlich für die Erfindungsidee ist die Übertragung der Zugspannungen der Hülle 2 auf den Druckstab 4.

Die Fig. 8 ist eine Variante der Fig. 7. Unter dem Druckstab 4 ist eine im Wesentlichen nicht auf Zug belastete gasdichte Innenhaut angebracht. Die Mittel zur Einleitung der Zugspannungen der Hülle 2 in den Druckstab 4 sind somit funktional und lokal von den Mitteln zur Abdichtung der Hülle 2 getrennt.

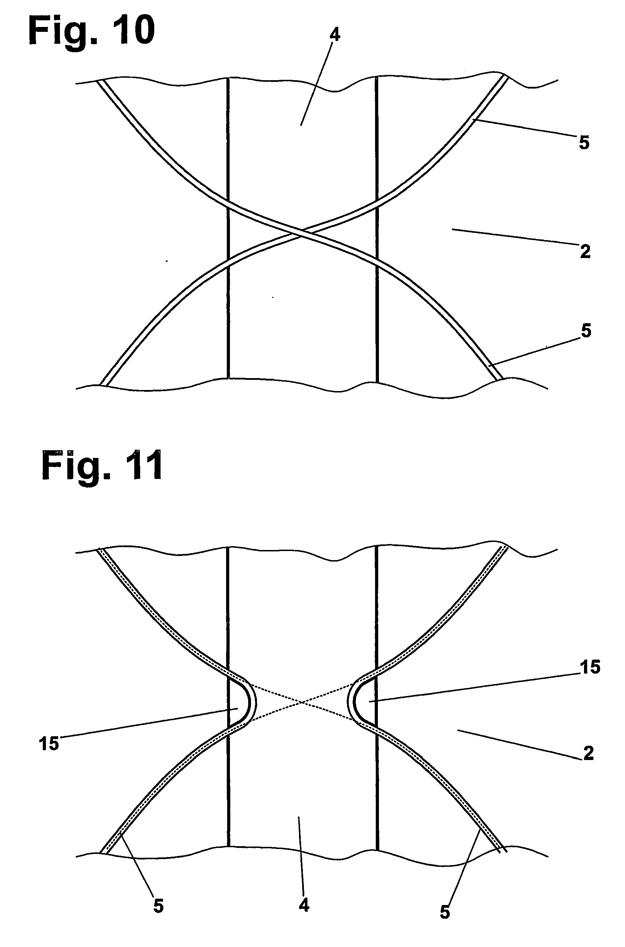

In der Fig. 9 ist schematisch dargestellt, wie ein Bauteil, hier beispielsweise eine Turbine 13 für den Vortrieb, im Bereich des Hecks 12 am Auftriebskörpers befestigt werden kann. Die Turbine 13 ist über eine Verankerung 14 fest mit dem Druckstab 4 verbunden. Die Verankerung 14 ist auf der Seite des Druckstabes 4 breiter gestaltet, so dass die durch die Schubkräfte erzeugten Momente auf einer breiten Basis 10 in den Druckstab 4 eingeleitet werden, Zusätzlich ist der Druckstab 4 im Bereich 10 verstärkt. Der biegeelastische Druckstab 4 ist damit lokal verwindungssteif und wird durch die eingeleiteten Momente nicht deformiert. Selbstverständlich sind andere Lösungen zur Einleitung von Kräften und Momenten in die Druckstäbe, ohne diese zu deformieren, im Erfindungsgedanken eingeschlossen.

Die Fig. 10, 11 zeigen je einen Kreuzungspunkt von Zugbändern 5 auf einen Druckstab 4. Die Fig. 10 stellt die einfachste Art der Kreuzung dar. Die zwei Zugbänder 5 werden nicht geführt und verlaufen eines unter dem anderen über den Druckstab 4 entlang je einer Geodäte der Hülle 2.

Die Fig. 11 ist eine Variante der Fig. 10. Die Zugbänder werden je durch Umlenklemente 15 von der Geodäten des einen Zugbandes in die Geodäte des anderen umgelenkt, wobei die Geodäten sich im selben Punkt kreuzen wie in Fig. 10 die Zugbänder 5. Der Druckstab 4 wird in dieser Konfiguration von den Zugbändern, wie durch die Hülle 2, zusätzlich mit einer Zugkraft zwischen den Umlenkelementen belastet. Dem Fachmann sind weitere Varianten zur Kreuzung oder Umlenkung bekannt. Beispielsweise kann der Druckstab 4 an der Kreuzungsstelle verdickt sein und Nuten zur Führung der Zugbänder 5 aufweisen. Wesentlich am Erfindungsgedanken ist, dass der Druckstab 4 an den Kreuzungsstellen nicht mit Scherspannungen belastet wird. Die Kreuzungsstellen auf der Hülle 2 können ähnlich wie jene auf dem Druckstab 4 gestaltet werden. Einerseits ohne jegliche Hilfsmittel, anderseits mit Hilfe von Führungs- oder Umlenkelementen, die separat angebracht werden.

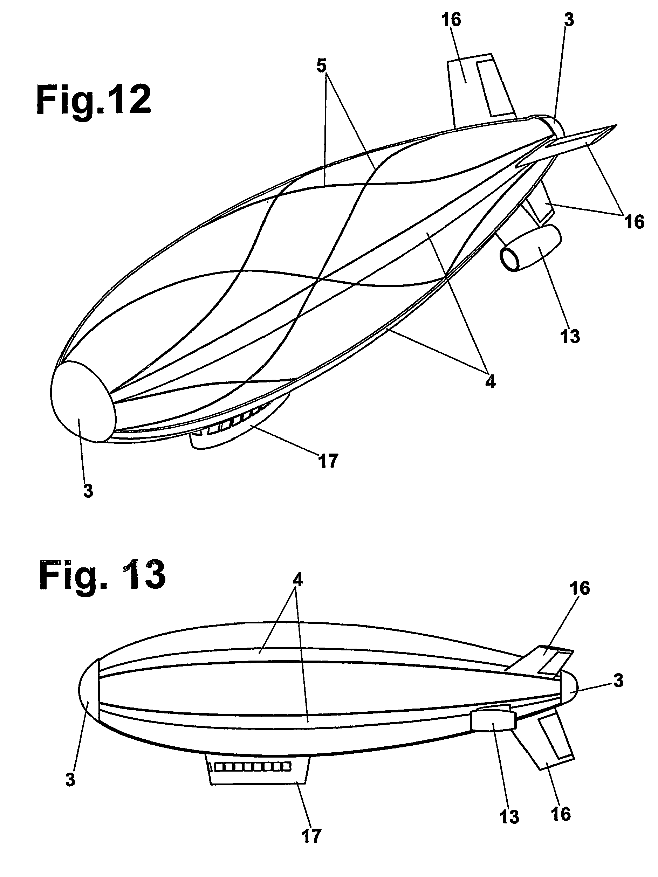

Die Fig. 12, 13 zeigen ein Luftschiff mit einem erfindungsgemässen Auftriebskörper 1. Die Leitwerke 16, die Gondel 17 und die Turbinen 13 sind je an einem der beispielsweise fünf Druckstäbe 4 befestigt. Obwohl der Auftriebskörper 1 in seinem Innern im Wesentlichen frei von Verstrebungen ist, bleibt er trotzdem unter der Last der Leitwerke 16, der Gondel 17 und der Turbinen 13 formstabil.

## Patentansprüche

1. Auftriebskörper (1) für ein Luftschiff bestehend aus einer gasdichten Hülle (2)
- mindestens ein Knotenelement (3) je im Bereich von Bug (11) und Heck (12) des Auftriebskörpers (1) vorhanden ist,
- mindestens ein Druckstab (4) vorhanden und mit der Hülle (2) verbunden ist und seine beiden Enden je in einem der Knotenelemente (3) verankert sind,
- der mindestens eine Druckstab (4) und die Knotenelemente (3) Mittel zu Befestigung der rigiden Komponenten eines Luftschiffes aufweisen, **dadurch gekennzeichnet, daß**:
- pro Druckstab (4) mindestens zwei Zugbänder (5) vorhanden sind, welche mit entgegengesetztem Schraubungssinn um die Hülle (2) herum von einem Ende eines Druckstabes (4) zum andern Ende desselben Druckstabes (4) verlaufen und in denselben Knotenelementen (3) verankert sind wie der mindestens eine Druckstab (4),

2. Auftriebskörper (1) für ein Luftschiff nach Patentanspruch 1, **dadurch gekennzeichnet, dass** mehrere Druckstäbe (4) vorhanden sind.

3. Auftriebskörper (1) für ein Luftschiff nach Patentanspruch 1 oder 2, **dadurch gekennzeichnet, dass** der mindestens eine Druckstab (4) biegeelastisch ist.

4. Auftriebskörper (1) für ein Luftschiff nach Patentanspruch 1, 2 oder 3, **dadurch gekennzeichnet, dass** der mindestens eine Druckstab (4) entlang einer Mantellinie des Hohlkörpers (2) verläuft.

5. Auftriebskörper (1) für ein Luftschiff nach einem der Patentansprüche 1 bis 4, **dadurch gekennzeichnet, dass** der mindestens eine Druckstab (4) aus GFK besteht.

6. Auftriebskörper (1) für ein Luftschiff nach einem der Patentansprüche 1 bis 4, **dadurch gekennzeichnet, dass** der mindestens eine Druckstab (4) aus CFK besteht.

7. Auftriebskörper (1) für ein Luftschiff nach Patentanspruch 2, **dadurch gekennzeichnet, dass** die Druckstäbe (4) rotationssymmetrisch angeordnet sind.

8. Auftriebskörper (1) für ein Luftschiff nach einem der Patentansprüche 1 bis 4, **dadurch gekennzeichnet, dass** der mindestens eine Druckstab (4) auf der Hülle (2) angebracht und mit ihr fest verbunden ist.

9. Auftriebskörper (1) für ein Luftschiff nach einem der Patentansprüche 1 bis 4, **dadurch gekennzeichnet, dass** der mindestens eine Druckstab (4) in die Hülle (2) integriert ist.

10. Auftriebskörper (1) für ein Luftschiff nach Patentanspruch 1, **dadurch gekennzeichnet, dass** das Knotenelement (3) schalenförmig ist und über den Bug (11) oder das Heck (12) der Hülle (2) gelegt ist.

11. Auftriebskörper (1) für ein Luftschiff nach Patentanspruch 1, **dadurch gekennzeichnet, dass** das Knotenelement (3) ringförmig ist und um den Bug (11) oder das Heck (12) der Hülle (2) gelegt ist.

12. Auftriebskörper (1) für ein Luftschiff nach Patentanspruch 10 oder 11, **dadurch gekennzeichnet, dass** die Enden der Druckstäbe (4) am Bug (11) und am Heck (12) je zusammen fest mit dem Knotenelement (3) verbunden sind.

13. Auftriebskörper (1) für ein Luftschiff nach einem der Patentansprüche 10, 11 oder 12, **dadurch gekennzeichnet, dass** Die Knotenelemente (3) so gestaltet sind, dass sie die Zugkräfte der Zugbänder (5) aufnehmen und momentefrei in die Druckstäbe (4) einleiten.

14. Auftriebskörper (1) für ein Luftschiff nach Patentanspruch 1, **dadurch gekennzeichnet, dass** die Zugbänder (5) aus wenig dehnbarem Material gefertigt sind und unter Zugspannung den mindestens einen Druckstab (4) gegen die Hülle (2) pressen.

15. Auftriebskörper (1) für ein Luftschiff nach Patentanspruch 14, **dadurch gekennzeichnet, dass** die Zugbänder (5) aus wenig dehnbaren textilen Materialien gefertigt sind.

16. Auftriebskörper (1) für ein Luftschiff nach Patentanspruch 15, **dadurch gekennzeichnet, dass** die Zugbänder (5) aus Aramidfasern gefertigt sind.

17. Auftriebskörper (1) für ein Luftschiff nach Patentanspruch 14, **dadurch gekennzeichnet, dass** die Zugbänder (5) je aus mindestens einem Stahlkabel gefertigt sind.

18. Auftriebskörper (1) für ein Luftschiff nach Patentanspruch 12, **dadurch gekennzeichnet, dass** die Zugbänder (5) zwischen den Knotenelementen (3) entlang von Geodäten der Hülle (2) verlaufen.

19. Auftriebskörper (1) für ein Luftschiff nach Patentanspruch 13, **dadurch gekennzeichnet, dass** an Kreuzungspunkten von Zugbändern (5) Umlenkelemente (15) vorhanden sind, so dass sich die Geodäten der Zugbänder im Kreuzungspunkt schneiden, die Zugbänder selbst jedoch von der einen in die andere Geodäte übergehen.

20. Verwendung des Auftriebskörpers (1) nach einem der vorhergehenden Patentansprüche als Auftriebskörper für ein Luftschiff.

## Claims

1. A lifting body (1) for an airship comprising a gas-tight skin (2), wherein
- at least one node element (3) is provided in each of the regions of nose (11) and rear (12) of the lifting body (1),
- at least one compression member (4) is provided and connected to the skin (2) and its two ends are each anchored in one of the node elements (3),
- the at least one compression member (4) and the node elements (3) have means for attaching the rigid components of an airship,
**characterized in that**
- at least two tensile bands (5) are provided per compression member (4), which run in opposite spiral directions around the skin (2) from one end of a compression member (4) to the other end of the same compression member (4) and are anchored in the same node elements (3) as the at least one compression member (4),

2. The lifting body (1) for an airship according to claim 1, **characterized in that** multiple compression members (4) are provided.

3. The lifting body (1) for an airship according to claim 1 or 2, **characterized in that** the at least one compression member (4) has bending elasticity.

4. The lifting body (1) for an airship according to claim 1, 2, or 3, **characterized in that** the at least one compression member (4) runs along a surface line of the hollow body (2).

5. The lifting body (1) for an airship according to one of claims 1 through 4, **characterized in that** the at least one compression member (4) is made of fiberglass-reinforced plastic.

6. The lifting body (1) for an airship according to one of claims 1 through 4, **characterized in that** the at least one compression member (4) is made of carbon-fiber-reinforced plastic.

7. The lifting body (1) for an airship according to claim 2, **characterized in that** the compression members (4) are positioned rotationally symmetric.

8. The lifting body (1) for an airship according to one of claims 1 through 4, **characterized in that** the at least one compression member (4) is attached to the skin (2) and permanently bonded thereto.

9. The lifting body (1) for an airship according to one of claims 1 through 4, **characterized in that** the at least one compression member (4) is integrated into the skin (2).

10. The lifting body (1) for an airship according to claim 1, **characterized in that** the node element (3) is shell-shaped and is laid over the nose (11) or the rear (12) of the skin (2).

11. The lifting body (1) for an airship according to claim 1, **characterized in that** the node element (3) is annular and is laid around the nose (11) or the rear (12) of the skin (2).

12. The lifting body (1) for an airship according to claim 10 or 11, **characterized in that** the ends of the compression members (4) at the nose (11) and at the rear (12) are each permanently bonded together to the node element (3).

13. The lifting body (1) for an airship according to one of claims 10, 11, or 12, **characterized in that** the node elements (3) are designed in such a way that they absorb the tensile forces of the tensile bands (5) and conduct them without torque into the compression members (4).

14. The lifting body (1) for an airship according to claim 1, **characterized in that** the tensile bands (5) are manufactured from material having low extensibility and press the at least one compression member (4) against the skin (2) under tensile stress.

15. The lifting body (1) for an airship according to claim 14, **characterized in that** the tensile bands (5) are manufactured from textile materials having low extensibility.

16. The lifting body (1) for an airship according to claim 15, **characterized in that** the tensile bands (5) are manufactured from aramid fibers.

17. The lifting body (1) for an airship according to Claim 14, **characterized in that** the tensile bands (5) are each manufactured from at least one steel cable.

18. The lifting body (1) for an airship according to claim 12, **characterized in that** the tensile bands (5) run between the node elements (3) along geodetic lines of the skin (2).

19. The lifting body (1) for an airship according to claim 13, **characterized in that** deflection elements (15) are provided at intersections of tensile bands (5), so that the geodetic lines of the tensile bands intersect in the intersection, but the tensile bands themselves pass from one geodetic line into the other.

20. A use of the lifting body (1) according to one of the preceding claims as a lifting body for an airship.

## Revendications

1. Corps portant (1) pour un dirigeable comprenant une enveloppe (2) étanche au gaz
- au moins un élément de noeud (3) étant présent respectivement dans la zone de l'avant (11) et de l'arrière (12) du corps portant (1),
- au moins une barre de pression (4) étant présente dans l'enveloppe (2) et ses deux extrémités étant ancrées chacune dans l'un des éléments de noeud (3),
- la au moins une barre de pression (4) et les éléments de noeud (3) présentant des moyens pour la fixation des composants rigides d'un dirigeable, **caractérisé en ce que** :
- par barre de pression (4), il est prévu au moins deux bandes de traction (5) qui sont agencées avec un sens de vissage opposé autour de l'enveloppe (2) d'une extrémité d'une barre de pression (4) à l'autre extrémité de la même barre de pression (4) et sont ancrées dans les mêmes éléments de noeud (3) que la au moins une barre de pression (4).

2. Corps portant (1) pour un dirigeable selon la revendication 1, **caractérisé en ce que** plusieurs barres de pression (4) sont présentes.

3. Corps portant (1) pour un dirigeable selon la revendication 1 ou 2, **caractérisé en ce que** la au moins une barre de pression (4) est élastique en flexion.

4. Corps portant (1) pour un dirigeable selon la revendication 1, 2 ou 3, **caractérisé en ce que** la au moins une barre de pression (4) est agencée le long d'une génératrice du corps creux (2).

5. Corps portant (1) pour un dirigeable selon l'une quelconque des revendications 1 à 4, **caractérisé en ce que** la au moins une barre de pression (4) est à base de GFK.

6. Corps portant (1) pour un dirigeable selon l'une quelconque des revendications 1 à 4, **caractérisé en ce que** la au moins une barre de pression (4) est à base de CFK.

7. Corps portant (1) pour un dirigeable selon la revendication 2, **caractérisé en ce que** les barres de pression (4) sont disposées de façon symétrique en rotation.

8. Corps portant (1) pour un dirigeable selon l'une quelconque des revendications 1 à 4, **caractérisé en ce que** la au moins une barre de pression (4) est placée sur l'enveloppe (2) et reliée de façon fixe à elle.

9. Corps portant (1) pour un dirigeable selon l'une quelconque des revendications 1 à 4, **caractérisé en ce que** la au moins une barre de pression (4) est intégrée dans l'enveloppe (2).

10. Corps portant (1) pour un dirigeable selon la revendication 1, **caractérisé en ce que** l'élément de noeud (3) est en forme de coque et est placé au-dessus de l'avant (11) ou de l'arrière (12) de l'enveloppe (2).

11. Corps portant (1) pour un dirigeable selon la revendication 1, **caractérisé en ce que** l'élément de noeud (3) est en forme d'anneau et est placé autour de l'avant (11) ou de l'arrière (12) de l'enveloppe (2).

12. Corps portant (1) pour un dirigeable selon la revendication 10 ou 11, **caractérisé en ce que** les extrémités des barres de pression (4) sur l'avant (11) et sur l'arrière (12) sont reliées chacune ensemble de façon fixe à l'élément de noeud (3).

13. Corps portant (1) pour un dirigeable selon l'une quelconque des revendications 10, 11 ou 12, **caractérisé en ce que** les éléments de noeud (3) sont conçus de telle sorte qu'ils reçoivent les forces de traction des bandes de traction (5) et les appliquent sans couple dans les barres de pression (4).

14. Corps portant (1) pour un dirigeable selon la revendication 1, **caractérisé en ce que** les bandes de traction (5) sont fabriquées à base de matériau peu extensible et pressent sous l'effet de la tension de traction la au moins une barre de pression (4) contre l'enveloppe (2).

15. Corps portant (1) pour un dirigeable selon la revendication 14, **caractérisé en ce que** les bandes de traction (5) sont fabriquées à base de matériaux textiles peu extensibles.

16. Corps portant (1) pour un dirigeable selon la revendication 15, **caractérisé en ce que** les bandes de traction (5) sont fabriquées à base de fibres d'aramide.

17. Corps portant (1) pour un dirigeable selon la revendication 14, **caractérisé en ce que** les bandes de traction (5) sont fabriquées chacune à base d'au moins un câble d'acier.

18. Corps portant (1) pour un dirigeable selon la revendication 12, **caractérisé en ce que** les bandes de traction (5) sont agencées entre les éléments de noeud (3) le long de géodésiques de l'enveloppe (2).

19. Corps portant (1) pour un dirigeable selon la revendication 13, **caractérisé en ce que** des éléments de déviation (15) sont présents aux points de croisement de bandes de traction (5), de sorte que les géodésiques des bandes de traction se coupent au point de croisement, mais que les bandes de traction même passent d'une géodésique à l'autre géodésique.

20. Utilisation du corps portant (1) selon l'une quelconque des revendications précédentes comme corps portant pour un dirigeable.
